# EUROPEAN PATENT APPLICATION

(11) **EP 2 012 473 A1**
(43) Date of publication of application: **07.01.2009**
(21) Application number: 07013316.0
(22) Date of filing: 06.07.2007
(51) Int. Cl.: H04L 12/56, H04L 12/28

(54) **Method and device for flow management and communication system comprising such device**

(71) Applicant: Nokia Siemens Networks Oy, 02610 Espoo (FI)
(72) Inventor: Pittmann, Frank, 12099 Berlin (DE); Schramm, Mirko, 13187 Berlin (DE)
(74) Representative: Bruglachner, Thomas E.

(57) **Abstract**

A method and a device for flow management are provided, wherein at least two access systems are used in parallel in particular for traffic transfer and traffic separation.

## Description

The invention relates to a method and to a device for flow management and to a communication system comprising such a device.

To ensure competitiveness of the 3GPP systems in a time frame of the next 10 years and beyond, a long-term evolution of the 3GPP access technology needs to be considered.

In particular, to enhance the capability of the 3GPP system to cope with the rapid growth in IP data traffic, the packet-switched technology utilized within 3G mobile networks requires further enhancement.

Important parts of such a long-term evolution include reduced latency, higher user data rates, improved system capacity and coverage, and reduced overall cost for the operator.

Additionally, it is expected that IP based 3GPP services will be provided through various access technologies. A mechanism to support seamless mobility between heterogeneous access networks, e.g. I-WLAN and 3GPP access systems, is a useful feature for future network evolution.

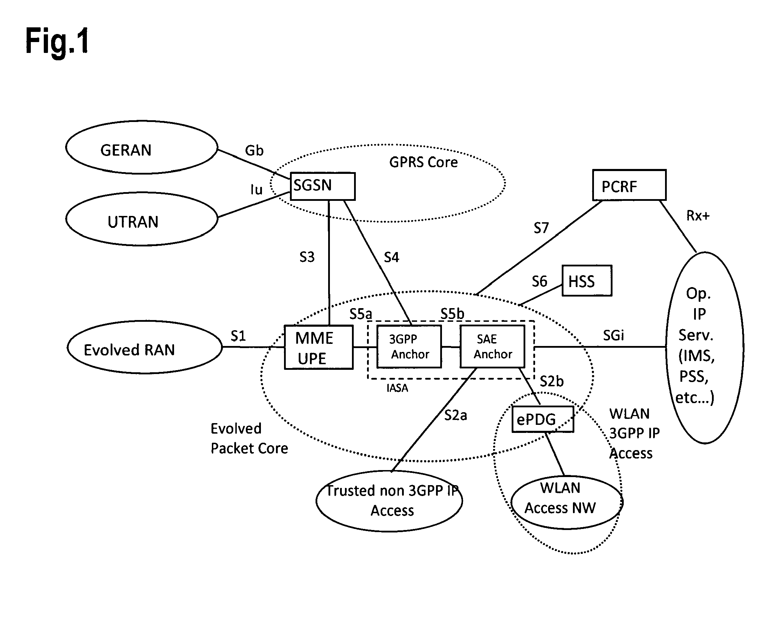

**Fig.1** shows a logical high-level architecture according to the 3GPP Systems Architecture Evolution (SAE) (see 3GPP TR 23.882 V1.8.0, figure 4.2-1) comprising a Policy Control and Charging Rules Function (PCRF) and an S7 interface (as a part of a Policy and Charging Control (PCC) architecture). Furthermore, the S7 interface shall terminate in a dedicated anchor, i.e. a SAE Anchor, anchoring 3GPP as well as non-3GPP accesses.

3GPP TS 23.203 V7.2.0 specifies an overall functionality for the Policy and Charging Control (PCC) architecture, whereas 3GPP TS 29.212 V7.0.0 specifies a Gx interface.

The Gx reference point is located between the Policy and Charging Rules Function (PCRF) and the Policy and Charging Enforcement Function (PCEF). The Gx reference point is used for provisioning and removal of PCC rules from the PCRF to a Policy and Charging Enforcement Function (PCEF) and the transmission of traffic plane events from the PCEF to the PCRF.

Basically, the Policy and Charging Control (PCC) architecture encompasses the following high level functions for IP Connectivity Access Networks (IP-CANs, e.g., GPRS, I WLAN, Fixed Broadband, etc.):
- Flow Based Charging, including charging control and online credit control;
- Policy control (e.g. gating control, Quality-of-Service (QoS) control, etc.).

Hereinafter, the terms IP-CAN and access system are used synonymously.

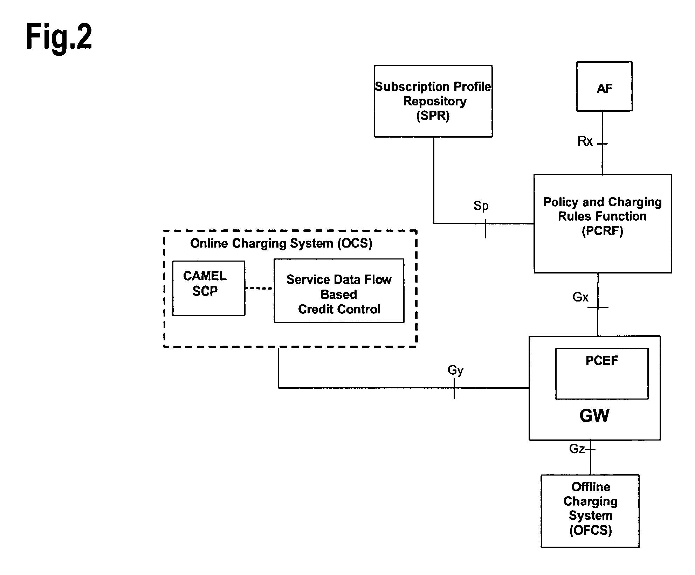

**Fig.2** shows the logical architecture of the Policy and Charging Control (PCC) architecture according to document 3GPP TS 23.203 V7.2.0 (figure 5.1 - Overall PCC Logical Architecture).

A Sp reference point lies between the Subscription Profile Repository (SPR) and the Policy Control and Charging Rules Function (PCRF).

The Sp reference point allows the PCRF to request subscription information related to the IP-CAN transport level policies from the SPR based on a subscriber ID, a Packet Data Network (PDN) identifier and possible further IP-CAN session attributes.

For example, the subscriber ID can be an International Mobile Subscriber Identity (IMSI). The reference point allows the SPR to notify the PCRF when the subscription information has been changed if the PCRF has requested such notifications. The SPR shall stop sending the updated subscription information when a cancellation notification request has been received from the PCRF.

The PCRF encompasses policy control decision and flow based charging control functionalities. So far, the PCRF provides network control regarding the Service Data Flow (SDF) detection, gating, QoS and Flow Based Charging (FBC) (except credit management) towards the Policy and Charging Enforcement Function (PCEF). In this context the PCRF shall accept input for PCC decision-making from the PCEF, Subscription Profile Repository (SPR) and if an Application Function (AF) is involved, from such an AF.

Basically, the PCRF has dynamic control over the PCC behavior at a PCEF, using message sequences to communicate both Service Based Local Policy (SBLP) decisions and FBC decisions by sending PCC rule(s) to the PCEF and by activating them. PCC rule(s) so far are valid for only one access system.

Systems Architecture Evolution (SAE) specifies a dedicated functional entity that anchors 3GPP and non 3GPP accesses, i.e. the SAE Anchor as shown in Fig.1.

The **object** to be solved is to overcome the disadvantages as stated before and to provide a more flexible approach regarding the handling of at least one access system.

This problem is solved according to the features of the independent claims. Further embodiments result from the depending claims.

In order to overcome this problem, a method for flow management is provided, wherein at least two access systems are used in parallel in particular for traffic transfer.

It is to be noted that traffic transfer relates in particular to all kind of data conveyed from a source to a destination, wherein all kind of sources as well as destinations can be intermediate ones within a communication path.

Advantageously, at least two access systems can be used for the distribution of traffic. Hence, according to the respective access systems used, traffic can be distributed to meet requirements of, e.g., high throughput and/or seamless mobility and/or high Quality-of-Service (QoS). The method ensures that the traffic flows via different access systems according to predetermined demands that may be set forth by user(s) and/or operator(s) and/or network condition(s).

In an embodiment, said traffic comprises at least one of the following:
- user traffic;
- speech;
- data;
- signaling information.

In a further embodiment, each of the at least two access systems is a 3GPP access system or a non-3GPP access system.

In particular active Policy and Charging Control (PCC) rules in the Policy and Charging Enforcement Function (PCEF) may be relevant for at least two (active) accesses and all services may be transferred across the at least two access systems.

According to another embodiment, the at least two access systems are administered by a Mobile Network Operator (MNO).

This approach allows to extend telecommunication systems in a way that available access systems can be used in parallel to enable optimized service delivery and network utilization through the Mobile Network Operator (MNO). As an example, the 3GPP access systems (2G, 3G and future 3GPP systems, like Long Term Evolution LTE) could be regarded as Wide Area Networks (WANs) with global coverage while wireless technologies like Wireless Area Network (WLAN) or Worldwide Interoperability for Microwave Access (WiMAX) could be seen as hot spot access systems with local coverage, but all such solution may be made available in parallel.

Pursuant to a next embodiment, a group of the at least two access systems are combined to a hot spot access system.

It is also an embodiment that the traffic is distributed among the at least two access systems. Said traffic may in particular be distributed dynamically and/or according to predetermined preferences as optionally set forth by a user and/or operator.

As an advantage of this approach it is possible to use two or more access systems in parallel for the transfer of user traffic by providing extensions to the Policy and Charging Control (PCC) architecture and/or the Systems Architecture Evolution (SAE) architecture, especially to the Policy Control and Charging Rules Function (PCRF) and the related interfaces Gx and Sp.

Hence, user traffic could be separated onto the different access systems in a way that for each service a suitable and/or an optimized access system can be selected. Criteria for such a selection may be a similarity between access system characteristics (with respect to QoS, security, etc.) and service requirements. However, a lot of other criteria may be applicable as well, e.g., cost efficiency, traffic load, etc., and may be configured by the operator for the decision logic.

Delay sensitive services (like multimedia telephony) could use access systems that are optimized for seamless handovers while bandwidth extensive services (like video streaming or file transfer) could use access systems that are optimized for high throughput.

Pursuant to another embodiment, an access system identifier can be used to indicate a relation to a specific access system.

According to a further embodiment, the method can be associated with a Policy Control and Charging Rules Function (PCRF) in particular of a 3G system.

According to yet another embodiment, extended Policy and Charging Control (PCC) rules are installed in a gateway, as e.g. the already mentioned SAE Anchor.

In particular, the following additional functionality and information can be provided:
A Subscription Profile Repository (SPR) provides the additional information, i.e. via an extended interface Sp to the Policy Control and Charging Rules Function (PCRF):
   - For each allowed service of a subscriber a list of access system identifiers needs to be provided (indicating whether a service can be transferred via this access system).
The Policy Control and Charging Rules Function (PCRF) provides the following functionality and additional information (via an extended interface Gx to the PCEF):
   - The PCRF decides for each service, on which access system the transfer of the service traffic should take place (based on the information about the availability of access systems and the allowance for each service (received from the SPR)). Further, operator specific policies may also have to be considered;
   - The PCRF may have to ensure that all services can be supported while a preferred or optimal access system is selected for each service. That means, the decision about which access system to use for a service needs to be re-evaluated whenever a new access system becomes available or a previously used access system disappears;
   - Extension of PCC rule's constituting parameters by an access system identifier to instruct the PCEF to use the indicated access system for the traffic of a service (described by the PCC rule).
The Policy and Charging Enforcement Function (PCEF) needs to provide the following functionality and information (via extended interface Gx to the PCRF):
   - Extended IP-CAN bearer attributes, i.e. information about available access systems.
   - The PCEF applied the access system identifier of the PCC rule to enforce the usage of the indicated access system for the traffic of this service.

The problem stated supra is also solved by a device for flow management comprising a processor unit that is equipped and/or arranged such that the method as described herein is executable on said processor unit.

In an embodiment, said device is a communication device, in particular comprising a Policy Control and Charging Rules Function (PCRF) and/or a gateway (function).

The problem is further solved by a communication system comprising a device as described herein.

Embodiments of the invention are shown and illustrated in the following figure:

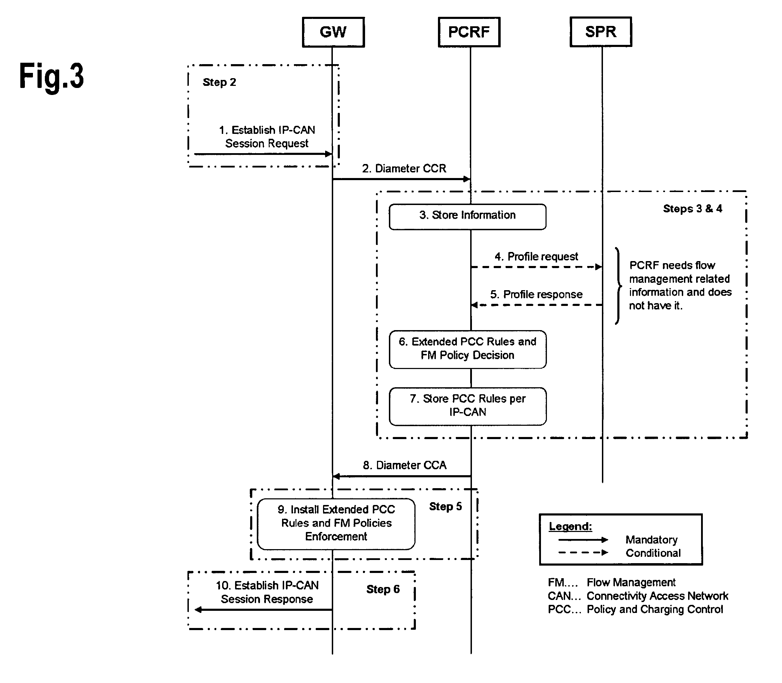

Fig.3 shows a communication diagram comprising communication paths between a user equipment UE, a gateway GW, a Policy Control and Charging Rules Function PCRF, a Subscription Profile Repository SPR and an Application Function AF.

The approach provided herewith proposes extensions to an existing Policy and Charging Control (PCC) architecture, especially to the interfaces Gx and Sp in particular to enable parallel access systems.

### Extensions for Subscription Profile Repository (SPR) and Sp reference point

The SPR logical entity contains all subscriber/subscription related information needed for subscription-based policies and IP-CAN bearer level PCC rules by the PCRF.

As proposed herewith, the SPR provides the following additional subscription profile information, i.e. in particular per access system:
a) For each allowed service of a subscriber a list of access system identifiers can be provided (indicating whether a service can be transferred via the particular access system);
b) For each given access system identifier, a priority information indicates the relative applicability for this service (such that the PCRF is able to select the most appropriate access system for each service);
c) More parameters may be used, e.g., to indicate whether a service is allowed to be switched to a new access system or not (due to potential interruption).

### Extensions for Policy Control and Charging Rules Function (PCRF)

The PCRF logical entity is part of the Policy and Charging Control (PCC) architecture as shown in, e.g., Fig.2. Basically, the PCC encompasses the following high level functions for IP-CANs:
a) Flow Based Charging, including charging control and online credit control;
b) Policy control (e.g. gating control, QoS control, etc.).

As proposed herewith, the PCRF may host the following additional functions that may be regarded as a basic functionality of a so-called "Flow Manager":
a) The PCRF decides for each service on which access system the transfer of the service traffic should be processed, based on an information relating to an availability of access systems and an allowance for each service (as obtained from the SPR), hereinafter also referred to as "separation decision".
b) The PCRF may have to ensure that all services can be supported while a preferred or an optimal access system is selected for each service. That means, the decision about which access system to use for a service needs to be re-evaluated whenever a new access system becomes available or a previously active access system disappears;
c) The PCRF may need to instruct the PCEF to use the indicated access system for a service (described by the PCC rule) .

As proposed, the PCRF preferably supports the extended interfaces Gx and Sp.

### Extensions for Policy and Charging Enforcement Function (PCEF)

The PCEF logical entity is dynamically controlled by the PCRF, using message sequences to communicate both SBLP decisions and FBC decisions by sending PCC rule(s) to the PCEF and by activating them.

As proposed herewith, the PCEF may preferably host the following additional functions:
a) The PCEF needs to convey extended IP-CAN bearer attributes, i.e. information about available access systems.
b) The PCEF has to apply the access system identifier of the PCC rule to enforce the usage of the indicated access system for the traffic of this particular service.

As proposed, the PCEF preferably supports the extended interface Gx.

### Extensions to Gx reference point

The Gx reference point lies between the PCEF and the PCRF and enables a PCRF to have dynamic control over the PCC behavior at a PCEF.

As proposed herewith, the extension for the Gx reference point shall enable the use of service data flow (SDF) based policy and/or charging rules, enhanced with the capability to support multiple access systems in parallel by using PCC rules to transfer the traffic of each service across the most appropriate access system.

Extended PCC rule definition (PCRF → PCEF) :
a) Each PCC rule comprises one access system identifier.
b) A PCC rule comprises:
   - A rule name;
   - Service identifier;
   - SDF filter(s);
   - Gate status;
   - QoS parameters;
   - Charging key (i.e. rating group);
   - Other charging parameters;
   - Access system identifier (as proposed herewith).

### Extended IP-CAN characteristics definition (PCEF → PCRF) :

The PCEF comprises at least one of the following parameters:
- Subscriber Identifier;
- IP address of the UE;
- IP-CAN bearer attributes;
- Request type (initial, modification, etc.);
- Type of IP-CAN;
- Location of the subscriber;
- A PDN identifier;
- IP-CAN bearer establishment mode;
- List of currently available access system identifier(s) (as proposed herewith).

### Informing the terminal (User Equipment, UE) about the separation decision

Once the PCRF has decided about the allocation of services to the currently available access systems, the terminal (UE) needs to be informed about this decision as well in order to use the correct access system in uplink direction.

Several approaches are applicable:
a) The terminal UE could wait for the first downlink packets and use the same access system for the uplink direction.
b) Alternatively, the terminal may be informed explicitly. The separation information could be transferred in different ways:
   - In a service layer, utilizing a service signaling (e.g., IMS session signaling);
   - In the transport layer, utilizing bearer, tunnel or QoS signaling (e.g., GPRS Tunneling Protocol (GTP) or Mobile Internet Protocol (MIP)).
c) Alternatively, a dedicated signaling could be introduced as well.

### User preferences for the separation decision

Basically, the operator wants to utilize the service separation to achieve a high efficiency on the radio interface. However, it is also possible that an operator allows the user to configure certain preferences on his/her own. For instance, a user may want to use a specific access system for a certain service to make the most out of its characteristics (e.g., seamless mobility). Such a preference could be used by the operator to avoid a complete movement of all user services to another access system for the sake of offering a higher bandwidth.

Furthermore, a user could instruct the operator to only allow a particular service in case a specific access system can be used. Such preference could be beneficial, e.g., for downloading or streaming services, which would in particular work for a higher bandwidth.

Those user preferences need to be transferred to the flow management logic in the PCRF preferably using some kind of dedicated signaling.

### Advantages

Each access system has individual properties and advantages mainly concerning
- Mobility;
- Quality of Service (QoS);
- Bandwidth; and
- Security.

Services like Voice over IMS (VoIMS) or FTP download, or media components of multimedia services like videoconferencing could be provided via different access systems, so that mobile network operators (MNOs) could use their network resources more efficiently by:
a) using expensive access systems mainly for services that indeed require a high QoS and/or seamless mobility;
b) using cheaper access systems for services with less strict QoS and mobility requirements;
c) using high throughput access systems for services requiring high bitrates.

MNOs gain the advantage to be able to easily integrate this PCC oriented solution in their networks due to the fact that logical entities and reference points are used (and extended). This allows easy migration towards proposed network controlled flow management using available access systems in a parallel manner.

In addition, also an end user (i.e. a mobile subscriber) benefits from using multiple access systems in parallel by
a) making use of different access system properties that are usually not provided by a single access system (like seamless mobility and high bitrates);
b) lowering the overall costs by utilizing expensive access systems only for those services for which it is really required.

### Example

Fig.3 shows a diagram illustrating an example as how signaling flows over extended Gx and Sp reference points as described herein.

For such illustration purposes, a scenario is chosen that extends IP-CAN session establishment based on the description according to chapter 4.1 of 3GPP TS 29.213 V0.2.0.

This highlights the fact that an introduction of network controlled flow management utilizes PCC, as it is proposed herein.

The scenario comprises the following steps:
1. UE establishes IP-CAN session and uses two services (VoIMS and FTP download) through one access system.
2. UE attaches at a second access system.
3. PCRF decides that (i) a parallel attachment is allowed and that (ii) the FTP download has to be done via the new access system.
4. PCRF modifies PCC Rule concerning the new Access System Identifiers.
5. PCEF enforces that PCC Rule so that the FTP download utilizes the new access system.
6. PCRF informs the UE about the decision and the UE utilizes the two available access systems accordingly.

According to the first part of this scenario, a user may travel with public transportation towards his home. In the city, only UMTS access is available. He starts two services, i.e., a voice call with his friend Bob and, in parallel, an FTP download of a movie that he wants to watch when arriving at home.

Technically, an IP-CAN session is requested and established as it is specified in chapter 4.1. of 3GPP TS 29.213 V0.2.0. In this scenario, it is a service request for Voice over IMS (VoIMS) and the FTP download through the mentioned UMTS access system. While driving home the only active access system is UMTS. This part is equivalent to step 1 of the scenario.

In the next part of the scenario, starting with step 2, the user has reached his apartment in which a WLAN/DSL access system is available. According to the approach presented herein and in particular initiated by the network, without any user interaction, the FTP download is now directed through WLAN/DSL in parallel to the ongoing phone call (still through UMTS).

The usage of WLAN/DSL for the service FTP download was configured by the user when configuring the WLAN/DSL access (one-time action sometimes before). Technically, the additional IP-CAN session is established in parallel according to the following signaling flow, using the extensions for the logical entities and reference points. This part of the scenario is equivalent to the steps 2 to 6, as introduced above, and depicted in Fig.3:
1. The Gateway GW receives an Establish IP-CAN Session Request. The form of this request depends upon the type of the IP-CAN.
   For GPRS, the GGSN receives the first Create PDP Context Request within a PDP session. For I-WLAN, the GW receives an IPSec tunnel establishment request. For WLAN, the GW may receive a Binding Update (BU) request.
   This request occurs as at least one other access system is already active in terms of an ongoing session through it.
2. The GW informs the PCRF of the establishment of an additional IP-CAN Session through another access system. The GW starts a new DCC session for this access by sending a CCR using the CC-Request-Type AVP set to the value INITIAL_REQUEST. The GW provides for this UE also the proposed list of currently available access system identifier(s).
3. The PCRF stores the information received in the Diameter CCR in the UE's context that is already available (because of first IP-CAN session establishment, here, from first part of the scenario). The PCRF knows now that the user wants to establish an additional access in parallel to already existing one(s); the PCRF verifies the stored information with the received list with access system identifiers.
4. If the PCRF does not have flow management (FM) related information, the PCRF sends a request to the SPR in order to receive the information, as proposed herein.
5. The SPR replies with the flow management (FM) related information containing the additional subscription profile information per access system.
6. The PCRF defines extended PCC Rule(s) to be installed per access system and makes flow management (FM) related policy decision(s) by associating flows with IP-CANs.
7. The PCRF stores the selected extended PCC Rules per access system.
8. The PCC Rules are provisioned by the PCRF to the GW using Diameter CCA. As proposed, the PCRF conveys with the extended PCC Rules also an access system identifier.
9. The GW installs the received PCC Rules per access system. The GW also enforces the flow management (FM) policies and enables or disables service flow according to the flow status of the corresponding extended PCC Rules.
10. The GW sends a response to the Establish IP-CAN Session Request.
   For GPRS, the GGSN accepts the PDP Context Request based on the results of the authorization policy decision enforcement; the GGSN may also convey uplink packet filters. For WLAN, the GW may accept the BU request with a Binding Acknowledge (BA) response; the GW may also convey through BA message necessary uplink FM filters. Hence, informing the terminal (UE) about the FM decision is done in the transport layer via the gateway GW.

### List of Abbreviations (in alphabetical order):

- AF: Application Function
- CCR: Charging Control Request
- CSI: Combinational Services
- DCC: Diameter Credit-Control
- DSL: Digital Subscriber Line
- FBC: Flow Based Charging
- FTP: File Transfer Protocol
- GGSN: Gateway GPRS Support Node
- GPRS: General Packet Radio Service
- GTP: GPRS Tunneling Protocol
- GW: Gateway
- IMS: IP Multimedia Subsystem
- IMSI: International Mobile Subscriber Identity
- IP: Internet Protocol
- IP-CAN: IP Connectivity Access Networks
- LTE: Long Term Evolution
- MIP: mobile IP
- MNO: Mobile Network Operator
- PCC: Policy and Charging Control
- PCEF: Policy and Charging Enforcement Function
- PCRF: Policy Control and Charging Rules Function
- PDN: Packet Data Network
- PDP: Packet Data Protocol
- QoS: Quality of Service
- SAE: Systems Architecture Evolution
- SBLP: Service Based Local Policy
- SDF: Service Data Flow
- SPR: Subscription Profile Repository
- UE: User Equipment
- VoIMS: Voice over IMS
- WAN: Wide Area Networks
- WiMAX: Worldwide Interoperability for Microwave Access
- WLAN: Wireless Area Network

## Claims

1. A method for flow management, wherein at least two access systems are used in parallel for traffic transfer.

2. The method according to claim 1, wherein said traffic comprises at least one of the following:
- user traffic;
- speech;
- data;
- signaling information.

3. The method according to any of the preceding claims, wherein each of the at least two access systems is a 3GPP access system or a non-3GPP access system.

4. The method according to any of the preceding claims, wherein the at least two access systems are administered by a Mobile Network Operator (MNO).

5. The method according to any of the preceding claims, wherein a group of the at least two access systems are combined to a hot spot access system.

6. The method according to any of the preceding claims, wherein the traffic is distributed among the at least two access systems.

7. The method according to any of the preceding claims, wherein the traffic is dynamically distributed among the at least two access systems.

8. The method according to any of the preceding claims, wherein the traffic is distributed among the at least two access systems according to preferences that are in particular set forth by a user and/or by an operator.

9. The method according to any of the preceding claims, wherein an access system identifier is used to indicate a relation to a specific assess system.

10. The method according to any of the preceding claims associated with a Policy Control and Charging Rules Function (PCRF).

11. The method according to any of the preceding claims extending a Policy and Charging Control (PCC) architecture.

12. The method according to any of the preceding claims, wherein extended Policy and Charging Control (PCC) rules are installed in a gateway.

13. A device for flow management comprising a processor unit that is arranged such that the method according of any of the preceding claims is executable on said processor.

14. The device according to claim 13, wherein said device is a communication device, in particular comprising a Policy Control and Charging Rules Function (PCRF) and/or a gateway function.

15. Communication system comprising the device according to any of claims 13 to 14.
